# EUROPEAN PATENT SPECIFICATION

(11) **EP 0 334 378 B1**
(45) Date of publication and mention of the grant of the patent: **19.05.1993**
(21) Application number: 89105292.0
(22) Date of filing: 23.03.1989
(51) Int. Cl.: C09J 4/00, C09J 4/02, C09J 181/06, C08F 4/00, C08F 255/02

(54) **Adhesive compositions**
Klebstoffzusammensetzungen
Compositions adhésives

(30) Priority: 25.03.1988 IT 1995088
(43) Date of publication of application: 27.09.1989
(73) Proprietor: MINISTERO DELL' UNIVERSITA' E DELLA RICERCA SCIENTIFICA E TECNOLOGICA, 00196 Roma (IT)
(72) Inventor: Morini, Giampiero, I-27058 Voghera Pavia (IT); Garbassi, Fabio, I-28100 Novara (IT); Citterio, Attilio, I-20132 Milan (IT)
(74) Representative: Barz, Peter, Dr.

(56) References cited:
- US-A- 3 446 752
- PATENT ABSTRACTS OF JAPAN, vol. 6, no. 174 (C-123), 8th September 1982; & JP-A-57 090 073
- DATABASE CHEMICAL ABSTRACTS (HOST STN), vol. 85, no. 14, 1976, abstract no. 94755e, Columbus, Ohio, US

## Description

The present invention relates to an adhesive composition and in particular to a new redox system for the initiation of radicalic polymerization particularly suitable for said adhesives.

The use of structural adhesives has substantially increased lately, chiefly in the space and motor fields with the consequent development of new high-performance adhesive systems.

The use of structural adhesives in such fields has made easier the replacement of the customary metal materials with polymeric materials.

Moreover, the finding and development of the class of structural acrylic adhesives has made their application possible on non-treated surfaces as well as and even on not perfectly cleaned surfaces, without exceedingly affecting the adhesive performance.

Contrary to the customary bicomponent adhesive systems, which generally react slowly at room temperature and moreover require a careful premixing of the components and a careful preparation of the surfaces as well, the bicomponent structural acrylic adhesives contain catalysts and adhesion promotors making possible a quick hardening at room temperature and requiring neither any premixing of the components nor any very careful preparation of the surfaces.

Different systems for the initiation of polymerization have been developed for acrylic adhesive compositions.

For instance, catalytic systems are known to the prior art comprising the combination of a tertiary amine and a peroxide (US -A-3 333 025); aldehyde/amine condensation products in combination with metal chelates (US-A-3 591 438); amines with benzoyl peroxide (US-A-3 725 504 and 3 832 274); a redox system with methylethyl- ketone hydroperoxide and cobalt naphthenate (US-A-3 838 093); the combination of amines, salts of transition metals, aldehyde/amine condensation products and peroxides (US-A-3 890 407): amines and peroxides in combination with oxidizable metal ions (US-A-3 994 764); saccharin or copper saccharinate and para-toluene sulfonic acid (US-A-4 052 244); peroxides and aldehyde/amine condensation products with non-transition metals comprising lead, zinc, tin, calcium, strontium, barium and cadmium (US-A-4 230 834); and a peroxidic initiator with a strong acid and ferrocene (US-A-3 855 040).

None of these adhesive compositions, however, is free from drawbacks, such as, for instance, poor storage stability, long setting time, and so on.

In order to overcome such drawbacks, in US-A-3 890 407 the use was proposed of a catalytic system consisting of a generator of free radicals, such as an organic peroxide, a hydroperoxide, a perester or a peracid; an initiator such as a tertiary amine; a promoter such as an organic salt of a transition metal; and an accelerator which may be a mixture of aldehyde/amine condensation products. Also in this case, however, the adhesive composition is not free from drawbacks due, for instance, to the setting time, which is not sufficiently short to allow the use of such compositions for continuous applications, to the maintenance of the optimum performance by changing the setting time, or to product stability which is not yet sufficiently great as to warrant long storing times.

In accordance with the present invention, it has now been discovered that the above mentioned drawbacks may be eliminated by using a particular initiation system of redox polymerization consisting of an oxaziridine and a reducing system.

The object of the present invention consists or consists essentially of bicomponent adhesive compositions having short setting times and high mechanical performance and high storage stability, comprising:
- a component A) consisting essentially of a solution of a chlorosulfonated polymer or of another elastomer in admixture with a sulfonyl chloride in one or more polymerizable vinyl monomers, and an oxaziridine having the formula: 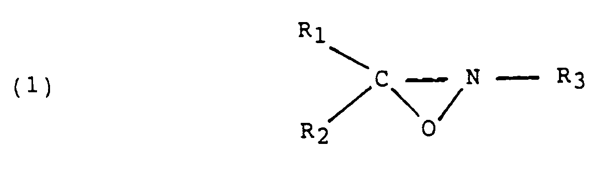 wherein R₁, R₂ and R₃, which may be the same or different, may be a hydrogen atom, an alkyl, isoalkyl, cycloalkyl, or aromatic radical having a number of carbon atoms ranging from 1 to 20; and
- a component B) containing an organic or inorganic reducing agent.

The vinyl monomer which may be used in the adhesive compositions of the present invention comprise acrylic monomers and their mixtures, for instance methyl methacrylate, ethyl methacrylate, acrylonitrile, methacrylonitrile, methyl acrylate, ethyl acrylate, n-butyl methacrylate, cyclohexyl methacrylate, n-hexyl methacrylate, 2-ethylhexyl methacrylate, lauryl methacrylate, n-butyl acrylate, cyclohexyl acrylate, n-hexyl acrylate, 2-ethylhexyl acrylate, lauryl acrylate, methacrylic acid, acrylic acid, glycidyl methacrylate, itaconic acid, acrylic or methacrylic esters of diols, triols, or polyols, acrylamide, methacrylamide, the halogenated monomers, for instance vinylidene chloride, chlorostyrenes, 2,3-dichloro-1,3-butadiene, 2-chloro-1,3-butadiene, styrene, and mono- and polyalkyl-styrenes, for instance methyl styrenes, dimethylstyrenes, ethylstyrenes or tert-butylstyrenes.

Acrylic monomers are preferred, and especially alkyl and cycloalkyl acrylates and methacrylates, ethylene glycol diacrylate and dimethacrylate, acrylic and methacrylic acid.

The chlorosulfonated polymer used in the adhesive compositions of the present invention is selected from the class of chlorosulfonated polyolefins. A preferred chlorosulfonated polymer is chlorosulfonated polyethylene, although chlorosulfonated copolymers of ethylene, containing small amounts of propylene or other olefins may be used as well.

Chlorosulfonated polyethylene is obtained according to known techniques by reacting linear or branched polyethylene with sulfuryl chloride or with sulfur dioxide and chlorine. This polymer is well known in the literature and is produced and sold by the Du Pont Company under the trade mark Hypalon®.

Any elastomer known to the prior art and soluble in the selected polymerizable vinyl monomer or monomers may be used in place of the chlorosulfonated polymer, for instance chlorinated polyethylene, polybutadiene, butadiene/acrylonitrile copolymers, polyacrylates, polyisoprene, polychloroprene, polyurethanes, polyfluorinated elastomers provided they are used in admixture with sulfonyl chlorides selected from the group comprising alkyl sulfonyl chlorides containing from 1 to 12 carbon atoms, for instance methane or butane sulfonyl chloride, aryl sulfonyl chlorides containing from 6 to 24 carbon atoms such as benzene or toluene sulfonyl chloride, and from the group comprising sulfonyl chlorides containing hetero-atoms such as for instance diphenyl-ether-4,4′ -disulfonyl chloride.

The relative ratios between the polymer and the polymerizable vinyl monomer may vary over a wide range. In the case of chlorosulfonated polyethylene and acrylic monomers such ratio ranges from 25 to 2000 parts by weight of monomer per 100 parts of polymer. A range from 50 to 500 parts by weight of monomer per 100 parts of chlorosulfonated polyethylene is preferred.

The amount of sulfonyl chloride, used in a solution of an elastomer different from the chlorinated sulfonyl polymer in one or more polymerizable vinyl monomers, may range between 0.1 and 5% by moles, with respect to the overall number of double bonds of the vinyl monomers. Amounts over 5% may be used without improving on the whole the characteristics of the adhesive systems of the present invention.

Moreover, one may add to the solutions a stabilizing agent selected from the group comprising quinones and hydroquinones, for instance, hydroquinone, hydroquinone monomethylether, anthraquinone, or 2,6-di-tert-butyl-p- methylphenol (BHT), in amounts ranging from 0.1 to 2 parts by weight per 100 parts of solution. 2,6-di-tert-butyl-p- methylphenol (BHT) is the preferred stabilizing agent.

The agent generating free radicals is an oxaziridine having the formula: 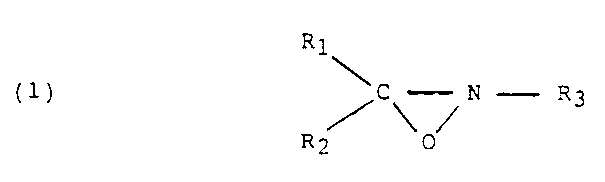
wherein R₁, R₂, and R₃, which may be the same or different, may be a hydrogen atom, an aliphatic, cycloalkylic, aromatic radical containing from 1 to 20 carbon atoms, such as for instance alkyl, alkenyl, aryl, cycloalkyl, alkylaryl, arylalkyl, alkylcycloalkyl and cycloalkylalkyl radicals; R₁ and R₂ and R₁ or R₂ and R₃ may together form a cycloalkyl ring either as a cycloalkylene or as a heterocyclic ring containing the nitrogen as the hetero-atom.

Moreover, two radicals R₃ and two or four radicals R₁ and R₂ may be taken together to form a polyoxaziridine having the formula 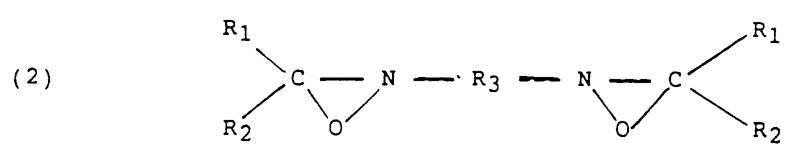 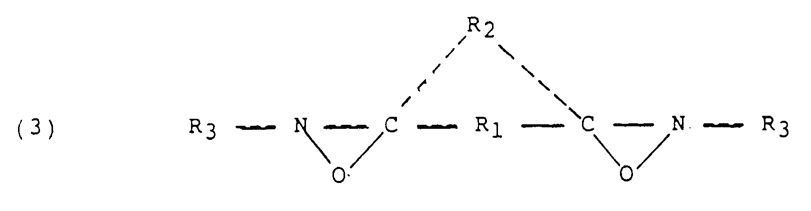
wherein R₁, R₂ and R₃ may be of the type specified in formula (1), but bivalent where indicated in formulas (2) and (3).

Molecules containing up to 5 oxiziridinic rings bound by bivalent radicals are within the scope of this invention.

Examples of radicals R₁, R₂ and R₃ are the following: methyl, ethyl, n-propyl, isopropyl, n-butyl, isobutyl, sec-butyl, ter-butyl, n-amyl, isoamyl, sec-amyl, neopentyl, trimethylethyl, n-octyl, 2-ethyhexyl, isooctyl, n-nonyl, isononyl, n-decyl, n-dodecyl, n-undecyl, n-tetradecyl, n-octadecyl, n-icosyl; allyl, butenyl, hexenyl, linolenyl, oleyl and octenyl; cyclopropyl, cyclobutyl, cyclopentyl, cyclohexyl, cycloheptyl, cyclooctyl, cyclododecyl, methylcyclohexyl, methylcyclopentyl, ethylcyclohexyl, diethylcyclobutyl, cyclohexylcyclohexyl, tetrahydronaphthyl; benzyl, phenyl, α-phenylethyl,β-phenylethyl, xylyl, toluyl, ethylbenzyl, ethylphenyl, naphthyl, phenanthryl, bisphenyl, chrysenyl, fluorenyl,α- and β-naphthylethyl; acyl such as benzoyl, acetyl, methacryloyl, acryloyl; and, when R₁ and R₂ and R₁ and/or R₂ and/or R₃ are taken together, tetramethylene, pentamethylene and hexamethylene; phenylene, cyclohexylene, 1,4-dimethylenephenylene.

The oxaziridines may be prepared easily according to known methods. A suitable method consists of oxidizing the corresponding imine by means of a peracid, such as peracetic acid or perbenzoic acid, or by means of hydrogen peroxide.

The corresponding ketones or aldehydes may also be reacted with chloramine or with hydroxylamino-O-sulfonic acid and their N-alkyl or N-aryl derivatives in the presence of alkalies.

These reactions are illustrated by the following equations:

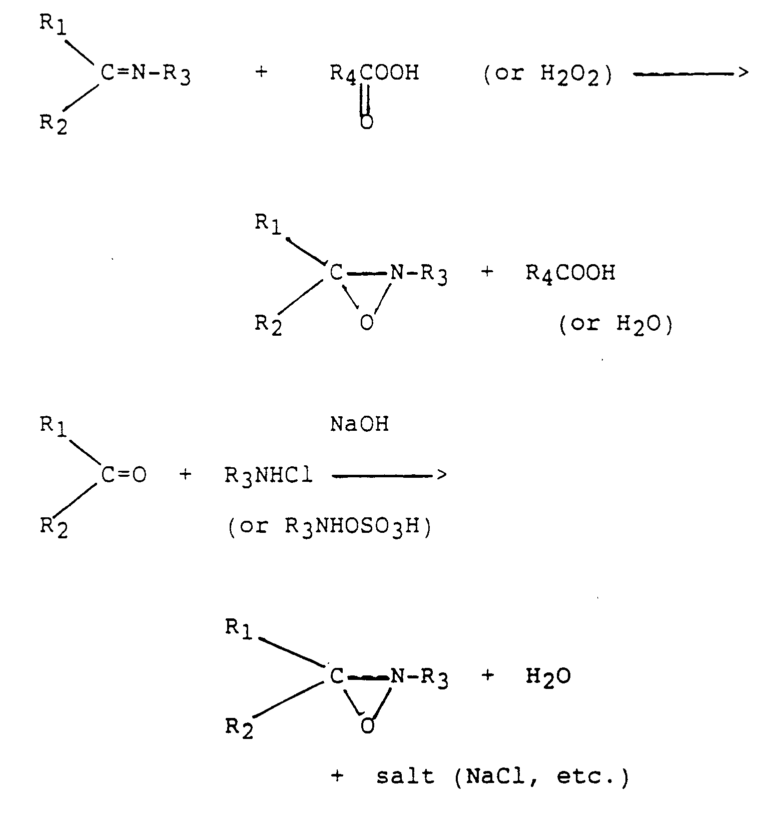

In the above formulae, R₁, R₂ and R₃ have the meanings defined hereinbefore and R₄ represents the radical of the peracid and may be any one of the radicals R₁, R₂ and R₃ as defined hereinbefore.

Examples of oxaziridines which may be used as generators of free radicals in the compositions of the present invention include the following:

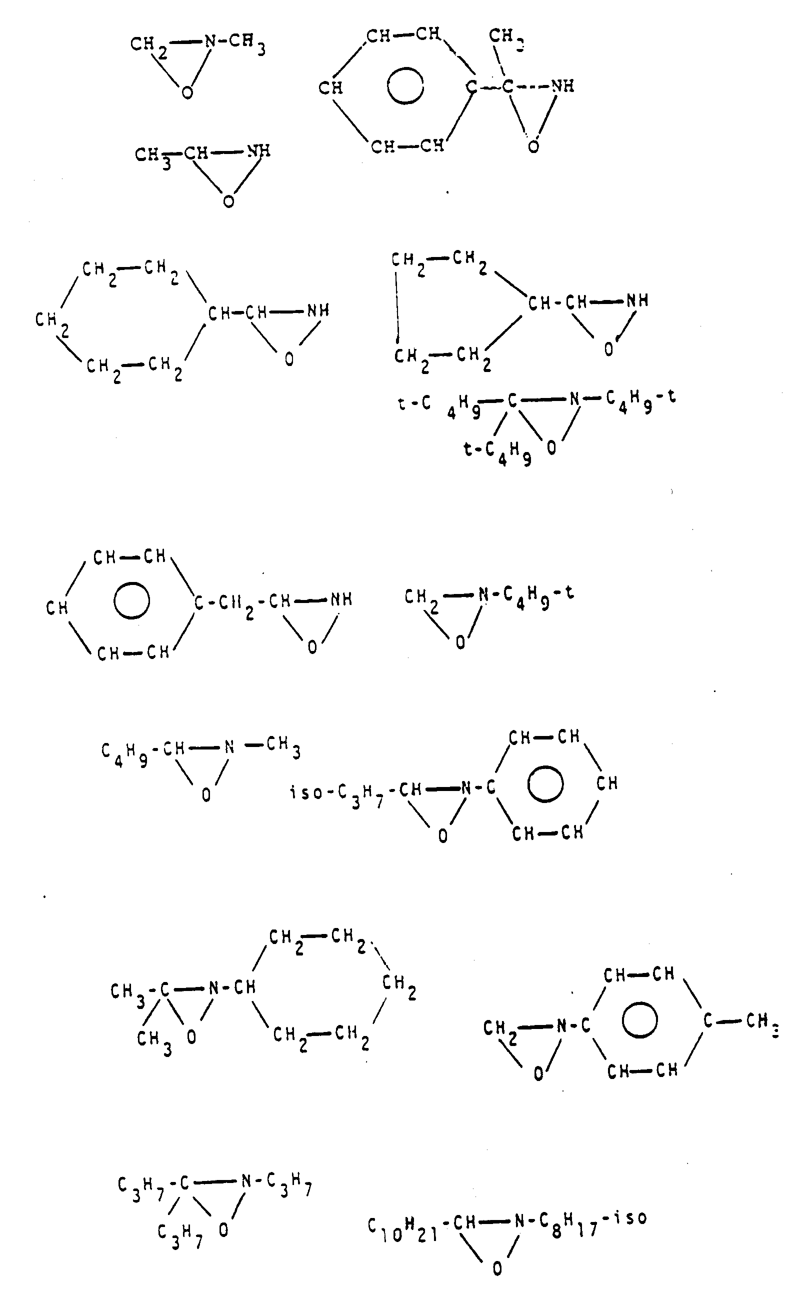

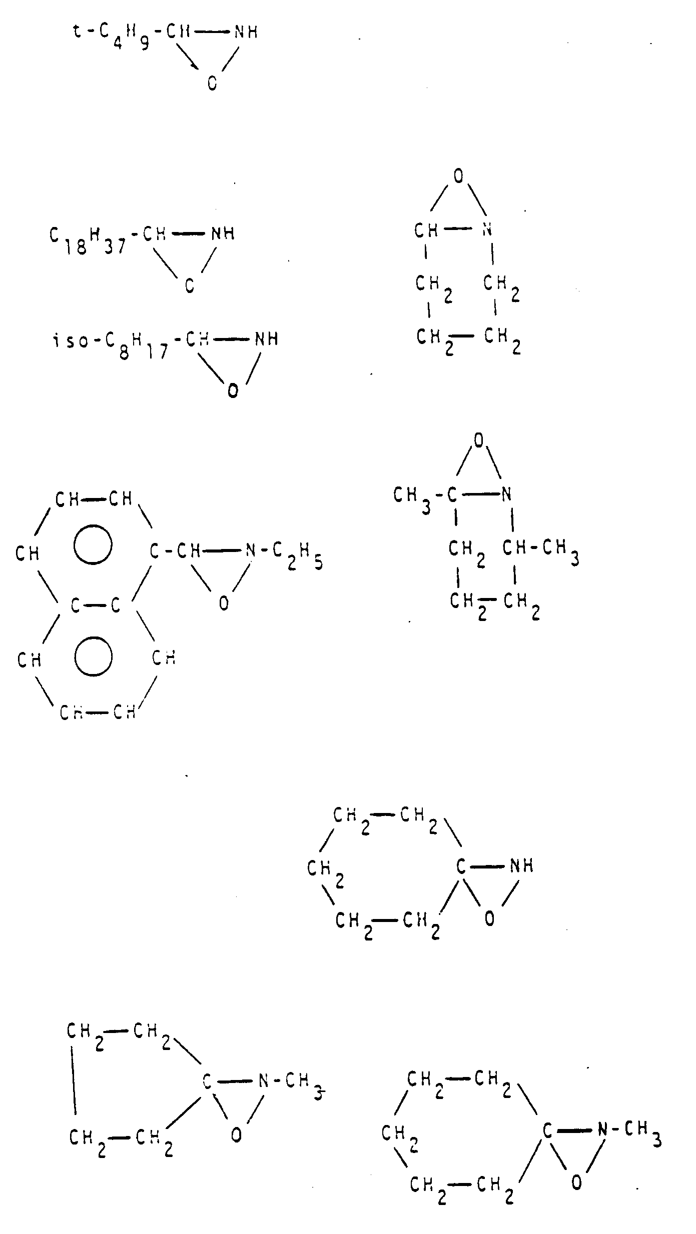

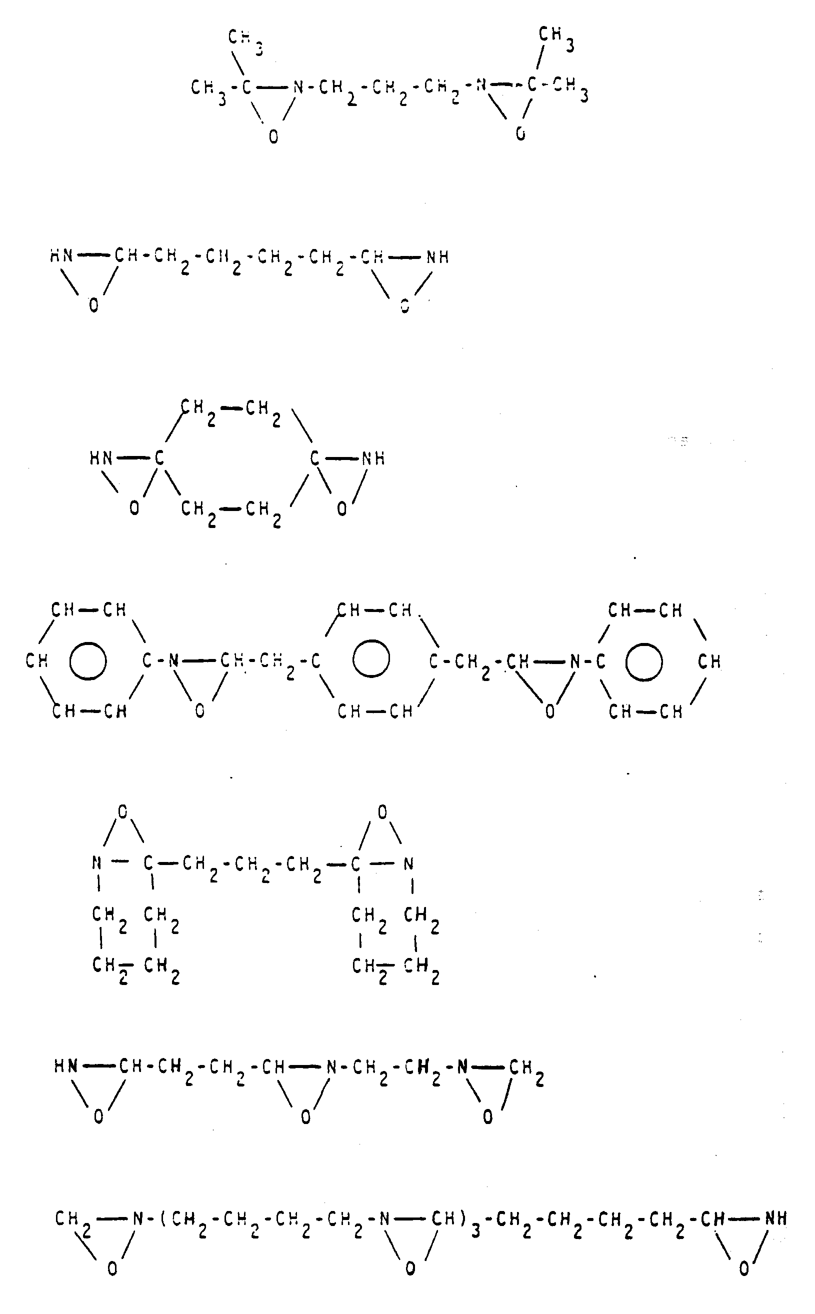

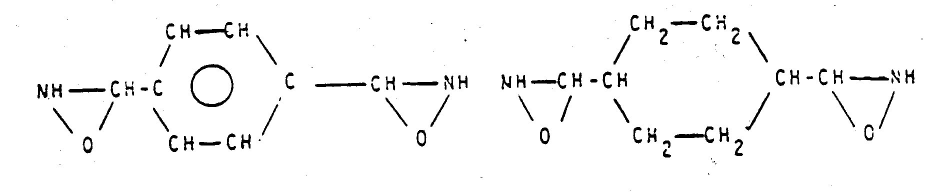

The amount of the oxaziridine used in the adhesive systems of this invention may range from 0.01 to 10% by moles with respect to the overall amount of double bonds present in the vinyl monomers. Amounts ranging from 0.02% to 5% are preferred. Amounts over 10% may be used but without still further improving the characteristics of the adhesive systems of this invention.

The oxaziridines may be used in combination with any known reducing agent or polymerization activator.

Examples of suitable reducing agents are the following: ferrous chloride, titanium dichloride, sodium or potassium bisulfite, ascorbic acid, acetaldehyde and other aldehydes, sulfurous acid, sulfites of alkali metals, bisulfites, sulfoxylates, thiosulfates, hydrogen sulfide, hydroxylamine, hydrazine, acetone sodium bisulfite, formaldehyde sodium sulfoxylate, sulfinic acids, copper and iron salts, salts of other metals having a low valency, levulinic acid, reducing sugars such as glucose, β-mercaptoethanol, dicyandiamide, iron salts of amino acids, iron succinate, copper sulfate pentahydrate, tertiary amines.

Moreover, it has been discovered that mixtures of aldehyde/amine condensation products are particularly suitable for use as reducing agents or as activators of polymerization; these mixtures of condensation products may be used as such, or purified partly, in order to achieve a higher concentration in the most active components and, in both cases, a soluble salt of a transition metal may be added.

Various aldehydes and amines are suitable for preparing the aldehyde/amine condensation products according to known methods. The aldehydes are preferably of an aliphatic nature and contain radicals having from 1 to 12 carbon atoms, for instance acetaldehyde, n-butyraldehyde, propionaldehyde, cyclopentanal; n-hexanal, cyclohexanal, hydrocinnamic aldehyde, n-heptanal, n-decanal, or n-dodecanal. Any primary aliphatic or aromatic amine having up to 18 carbon atoms may be used, for instance ethylamine, n-butylamine, n-pentylamine, cyclopentylamine, n-hexylamine, cyclohexylamine, n-octylamine, n-decylamine, n-dodecylamine, n-hexadecylamine, n-octadecylamine, aniline, toluyl amines, or xylyl amines.

The preferred mixture used as activator of polymerization consists essentially of butyraldehyde/aniline condensation products and may be obtained in the market under the trade-mark VAMAC® 808 by the Du Pont Company.

The most active component of the mixture is N-phenyl-3,5-diethyl-2-propyl-1,2-dihydropyridine (DHP), present in the mixture in amounts not over 50% by weight.

The activator may be enriched with DHP up to 100% by fractional distillation; fractions containing DHP between 70% and 100% by weight may be used with improved performance.

In the present application, DHP denotes mixtures containing at least 70% by weight of the above-mentioned dihydropyridine derivative.

Both the aniline/butyraldehyde condensation products and the DHP may be used as such or diluted with solvents, preferably chlorinated solvents, for instance 1,1,1-trichloroethane, or methylene chloride, with differing amounts of solvent, ranging from 10 to 80% by weight.

Soluble salts of transition metals containing preferably cobalt, nickel, copper, manganese, iron and vanadium may be added either to the aniline/butyraldehyde condensation products mixture, to the DHP, or to solutions thereof, in concentrations not over 5% by weight.

Examples of usable organic salts are the following: copper saccharinate, copper para-toluenesulfonate, cobalt acetylacetonate, cobalt naphthenate, vanadium acetylacetonate, iron octoate, iron naphthenate, iron lactate, iron gluconate, and iron saccharinate.

The adhesive compositions of the acrylic type of the present invention are characterized by a more efficient redox system of radicalic polymerization which confer on these compositions:
- a longer storage time, measured as the time during which no increase of viscosity over 10% occurs, by subjecting the samples to a quick ageing at 50°C.
- a short setting time, measured as the elapsed time within which two glued specimens cannot be separated by a shearing stress applied manually, which setting time may be changed at will between below 15 seconds and over 2 minutes, while maintaining nearly unchanged the mechanical performance.

The adhesive compositions are utilized by making use of the primer technique, which contemplates the application of the adhesive component on a part which must adhere and the application of the activating agent on the other part which must adhere. Moreover, they may be utilized at room temperature, or at higher temperatures as well, both in setting and in working.

The adhesive compositions of the present invention may be used either on porous surfaces or on smooth surfaces, without necessarily requiring any pretreatment of the surfaces to which the compositions are applied.

Materials which may be glued by making use of the acrylic adhesives of the present invention include, for instance, the following: steel, aluminum, copper, brass, polymeric materials, wood, glass, paper, and previously painted surfaces.

A few examples will be given hereinafter by way of illustration and not of limitation, in order still better to illustrate the present invention.

### EXAMPLES 1-8

Varying amounts of 3,3-pentamethylene-2-cyclohexyloxaziridine were added to a predetermined composition consisting of: 30 g of Hypalon®20 (chlorosulfonated polyethylene containing about 30 g of chlorine and 47 mmoles of sulfonyl chloride groups per 100 g of polymer), 10 g of methacrylic acid, 54 g of cyclohexylmethacrylate, 5 g ethyleneglycol dimethacrylate, and 0.33 g of BHT, in order to obtain adhesive systems having molar ratios between oxaziridine and the overall amounts of double bonds as indicated below in Table 1.

The adhesive systems were prepared by keeping the mixtures under stirring at room temperature till the whole polymer was completely dissolved.

The thus-obtained adhesive systems were characterized by measuring the resistance to shearing stress according to ASTM D 1002-72(1983) and the setting time.

Six single-lap joints were prepared for each adhesive system by using steel specimens having the following sizes: 120, 25 and 1.5 mm, from which only the fat or grease had been removed by trichloroethylene as solvent.

A film of adhesive paste of about 0.5 mm was spread on a specimen and a film of activating agent of polymerization, consisting of DHP, was spread on the other specimen, and afterwards the parts of the two specimens intended for adhesion were joined.

The resistance to shearing stress was measured by making use of the apparatus MTS 810 according to ASTM D 1002-72 (1983), by maintaining a cutting speed of 1 mm/min., and by carrying out the test 72 hours after gluing.

Setting time was measured by making use of the same gluing method, of the same parts intended for adhesion and of the same treatments used for the preparation of the single lap joints used for measuring the resistance to shearing stress, and by measuring the lowest time that was necessary in order that the joint be not broken by applying a shearing stress manually.

The obtained values of the resistance to shearing stress (an average of 6 tests) and of setting time are set forth in Table 1:

**TABLE 1**

| EX. No. | 1 | 2 | 3 | 4 | 5 | 6 | 7 | 8 |
|---|---|---|---|---|---|---|---|---|
| oxaziridine mol %, with respect to C=C | 3.3% | 1.6% | 0.8% | 0.4% | 0.2% | 0.1% | 0.05% | 0.025% |
| setting time | 15˝ | 15˝ | 30˝ | 30˝ | 1′15˝ | 1′15˝ | 1′45˝ | 2′ |
| resistance to shearing stress (N/mm²) | 17.8 | 18.2 | 17.8 | 18.2 | 16.0 | 16.5 | 17.3 | 16.0 |

### EXAMPLES 9-12 (comparison tests)

Varying amounts of cumyl hydroperoxide (CHP) were added, in place of 3,3-pentamethylene-2-cyclohexyloxaziridine, to the adhesive composition exactly like the one described in Examples 1-8, in order to obtain adhesive systems having the molar ratios between the CHP and the overall amount of double bonds as indicated below in Table 2.

Preparation and characterization of the adhesive systems were carried out under the same conditions as described in Examples 1-8.

The obtained values of the resistance to shearing stress (an average of 6 tests) and of the setting time are set forth below in Table 2 and constitute verification of the better effectiveness of the oxaziridines, with respect to the usual initiators of polymerization both as to setting time and as to resistance to shearing stress.

**TABLE 2**

| EX. No. | 9 | 10 | 11 | 12 |
|---|---|---|---|---|
| CHP mol %, with respect to C=C | 1.6% | 0.4% | 0.1% | 0.025% |
| setting time | 1′15˝ | 1′45˝ | 2′15˝ | 2′45˝ |
| resistance to shearing stress (N/mm²) | 16.6 | 16.1 | 15.1 | 11.3 |

The adhesive systems described in Examples 1-8 and 9-12, when subjected to quick ageing at 50°C, underwent, after 1 month no significant change as to the starting characteristics.

### EXAMPLES 13-32

Varying amounts of 3,3-pentamethylene-2-phenyloxaziridine were added to an adhesive composition exactly like the one described in Examples 1-8, in order to obtain adhesive systems having molar ratios between the oxaziridine and the overall amount of double bonds as indicated below in Table 3.

The preparation of the adhesive compositions was carried out as described in Examples 1-8.

Setting time of the different adhesive compositions obtained by using as reducers (or activators of polymerization) was measured:
1) DHP described hereinbefore;
2) a mixture (A) consisting of a solution containing 80% by weight of DHP in methylene chloride and 0.1% by weight of copper (I) saccharinate;
3) a mixture (B) consisting of a solution of methylene chloride containing 80% by weight of DHP and 0.2% of iron (II) saccharinate;
4) a mixture (C) consisting of a solution of methylene chloride containing 80% by weight of DHP and 0.2% of copper (II) saccharinate;
5) a mixture (D) consisting of a solution of methylene chloride containing 80% by weight of DHP and 0.3% of iron (III) saccharinate.

The values of the setting time thus obtained are set forth in Table 3, together with the molar ratios between the oxaziridine and the overall amount of double bonds.

**TABLE 3**

| EX. No. | Oxaziridine mol %, with respect to C=C | setting time | | | | |
|---|---|---|---|---|---|---|
| | | DHP | mixt. A | mixt. B. | mixt. C | mixt. D |
| 13 | 1.6% | 45˝ | -- | -- | -- | -- |
| 14 | 1.6% | -- | 30˝ | -- | -- | -- |
| 15 | 1.6% | -- | -- | 1′ | -- | -- |
| 16 | 1.6% | -- | -- | -- | 30˝ | -- |
| 17 | 1.6% | -- | -- | -- | -- | 1′ |
| 18 | 0.4% | 1′30˝ | -- | -- | -- | -- |
| 19 | 0.4% | -- | 1′ | -- | -- | -- |
| 20 | 0.4% | -- | -- | 1′15˝ | -- | -- |
| 21 | 0.4% | -- | -- | -- | 1′ | -- |
| 22 | 0.4% | -- | -- | -- | -- | 1′15˝ |
| 23 | 0.1% | 2′15˝ | -- | -- | -- | -- |
| 24 | 0.1% | -- | 1′30˝ | -- | -- | -- |
| 25 | 0.1% | -- | -- | 2′15˝ | -- | -- |
| 26 | 0.1% | -- | -- | -- | 1′30˝ | -- |
| 27 | 0.1% | -- | -- | -- | -- | 2′15˝ |
| 28 | 0.025% | 4′ | -- | -- | -- | -- |
| 29 | 0.025% | -- | 5′30˝ | -- | -- | -- |
| 30 | 0.025% | -- | -- | 4′30˝ | -- | -- |
| 31 | 0.025% | -- | -- | -- | 5′30˝ | -- |
| 32 | 0.025% | -- | -- | -- | -- | 4′30˝ |

### EXAMPLES 33-39

Varying amounts of methanesulfonyl chloride and of 3,3-pentamethylene-2-cyclohexyloxaziridine were added to an adhesive composition consisting of 20 g of Elaprim®S 3345 butadiene-acrylonitrile copolymer (traded by Enichem Company), 10 g of methacrylic acid, 63 g of cyclo-hexylmethacrylate, 5 g of ethylene glycol dimethacrylate, and 0.33 g of BHT, in order to obtain adhesive systems having molar ratios between sulfonyl chloride and overall amount of double bonds and between oxaziridine and overall amount of double bonds as set forth below in Table 4.

The adhesive compositions were prepared by maintaining the mixtures under stirring at room temperature till the whole polymer was completely dissolved.

The thus-obtained adhesive compositions were characterized by measuring the setting time by using DHP as reducer (or activator of polymerization).

The values of the setting time are set forth in Table 4.

**TABLE 4**

| EX. No. | 33 | 34 | 35 | 36 | 37 | 38 | 39 |
|---|---|---|---|---|---|---|---|
| sulfonyl chloride mol %, with respect to C=C | 2.6% | 1.3% | 0.7% | 0.7% | 0.7% | 0.7% | 0.7% |
| oxaziridine mol %, with respect to C=C | 0.37% | 0.37% | 0.37% | 0.18% | 0.7% | 1.4% | 2.8% |
| setting time | 2′ | 2′15˝ | 2′15˝ | 2′30˝ | 2′15˝ | 2′ | 1#MIN#45˝ |

## Claims

1. Multicomponent adhesive compositions comprising:
(a) a solution in one or more polymerizable vinyl monomers of (i) a chlorosulfonated polymer or of (ii) an elastomer different from the chlorosulfonated polymer in mixture with a sulfonyl chloride;
(b) an oxaziridine of general formula (I): 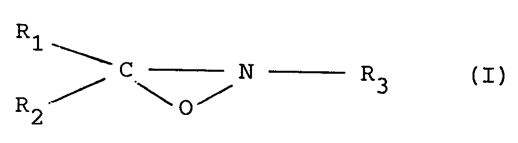 wherein R₁, R₂ and R₃, the same or different, are independently selected from hydrogen and C₁-C₂₀ alkyl, isoalkyl, cycloalkyl and aromatic radicals or R₁ and R₂ and R₁ or R₂ and R₃ are taken together to form either a cycloalkyl ring or a heterocyclic ring containing the N-atom as hetero-atom, or two radicals R₃ and two or four radicals R₁ and R₂ taken together form a polyoxaziridine; and
(c) an organic or inorganic reducing agent as polymerisation activator.

2. Compositions according to claim 1, wherein the oxaziridine of formula (I) is present in amounts ranging from 0.01 to 10% by moles with respect to the overall amount of double bonds of the vinyl monomers.

3. Compositions according to claim 1 or 2, wherein the oxaziridine of formula (I) has from 1 to 5 oxaziridine rings.

4. Compositions according to any one of claims 1 to 3, wherein the polymerizable vinyl monomers are acrylic monomers and the chlorosulfonated polymer is chlorosulfonated polyethylene, present in amounts ranging from 25 to 2000 parts by weight of monomer per 100 parts by weight of polymer.

5. Compositions according to any one of claims 1 to 4, wherein the elastomer different from the chlorosulfonated polymer is an elastomer soluble in said polymerizable vinyl monomers.

6. Compositions according to any one of claims 1 to 5, wherein the sulfonyl chloride is selected from alkyl sulfonyl chlorides containing from 1 to 12 carbon atoms, aryl sulfonyl chlorides containing from 6 to 24 carbon atoms, and sulfonyl chlorides containing hetero-atoms.

7. Compositions according to claim 6, wherein the sulfonyl chloride is present in amounts ranging from 0.1 to 5% by moles with respect to the overall amount of double bonds of the vinyl monomers.

8. Compositions according to any one of claims 1 to 7, wherein the reducing agent is a mixture of aldehyde/amine condensation products.

9. Compositions according to claim 8, wherein the aldehyde/ amine condensation product mixture consists of butyraldehyde/aniline condensation products, the most active component of said butyraldehyde/aniline condensation product mixture preferably being N-phenyl-3,5-diethyl-2-propyl-1,2-dihydropyridine (DHP) having a degree of purity of higher than 70% by weight.

10. Compositions according to claim 9, wherein the butyraldehyde/aniline condensation products or DPH are diluted with a solvent such as methylene chloride in amounts ranging from 10 to 80% by weight.

11. Compositions according to claim 9 or 10, wherein a soluble salt of a transition metal selected from cobalt, nickel, copper, manganese, iron and vanadium is added in a concentration not higher than 5% by weight with respect to the butyraldehyde/aniline condensation products or DHP.

12. Compositions according to claim 11, wherein the soluble salt of a transition metal is copper (I) or (II) saccharinate or iron (II) or (III) saccharinate.

## Patentansprüche

1. Mehrkomponenten-Klebstoffzusammensetzungen, welche umfassen:
(a) eine Lösung in einem oder mehreren polymerisierbaren Vinylmonomeren von (i) einem chlorsulfonierten Polymeren oder von (ii) einem von dem chlorsulfonierten Polymeren verschiedenen Elastomeren in Mischung mit einem Sulfonylchlorid;
(b) ein Oxaziridin der allgemeinen Formel (I): 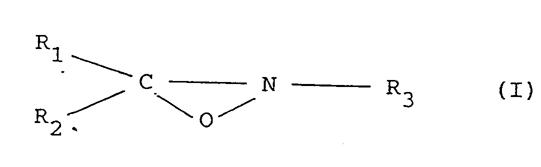 worin R₁, R₂ und R₃, gleich oder verschieden, unabhängig ausgewählt sind aus Wasserstoff und C₁-C₂₀-Alkyl-, iso-Alkyl-, Cycloalkyl- und aromatischen Resten oder R₁ und R₂ und R₁ oder R₂ und R₃ zusammengenommen werden, um entweder einen Cycloalkylring oder einen das N-Atom als Heteroatom enthaltenden heterocyclischen Ring zu bilden, oder zwei Reste R₃ und zwei oder vier Reste R₁ und R₂ zusammengenommen ein Polyoxaziridin bilden; und
(c) ein organisches oder anorganisches Reduktionsmittel als Polymerisationsaktivator.

2. Zusammensetzungen nach Anspruch 1, worin das Oxaziridin der Formel (I) in Mengen anwesend ist, die im Bereich von 0,01 bis 10 Mol-%, bezogen auf die Gesamtmenge an Doppelbindungen der Vinylmonomeren, liegen.

3. Zusammensetzungen nach Anspruch 1 oder 2, worin das Oxaziridin der Formel (I) 1 bis 5 Oxaziridinringe aufweist.

4. Zusammensetzungen nach irgendeinem der Ansprüche 1 bis 3, worin die polymerisierbaren Vinylmonomeren Acrylmonomere sind und das chlorsulfonierte Polymere chlorsulfoniertes Polyethylen ist, anwesend in einer Menge im Bereich von 25 bis 2000 Gew.-Teile Monomer pro 100 Gew.-Teile Polymer.

5. Zusammensetzungen nach irgendeinem der Ansprüche 1 bis 4, worin das von dem chlorsulfonierten Polymeren verschiedene Elastomere ein in den polymerisierbaren Vinylmonomeren lösliches Elastomeres ist.

6. Zusammensetzungen nach irgendeinem der Ansprüche 1 bis 5, worin das Sulfonylchlorid ausgewählt ist aus Alkylsulfonylchloriden, die 1 bis 12 Kohlenstoffatome enthalten, Arylsulfonylchloriden, die 6 bis 24 Kohlenstoffatome enthalten, und Sulfonylchloriden, die Heteroatome enthalten.

7. Zusammensetzungen nach Anspruch 6, worin das Sulfonylchlorid in Mengen im Bereich von 0,1 bis 5 Mol-%, bezogen auf die Gesamtmenge an Doppelbindungen der Vinylmonomeren, anwesend ist.

8. Zusammensetzungen nach irgendeinem der Ansprüche 1 bis 7, worin das Reduktionsmittel eine Mischung von Aldehyd/Amin-Kondensationsprodukten ist.

9. Zusammensetzungen nach Anspruch 8, worin die Aldehyd/Amin-Kondensationsproduktmischung aus Butyraldehyd/Anilin-Kondensationsprodukten besteht, wobei die aktivste Komponente der Butyraldehyd/Anilin-Kondensationsproduktmischung vorzugsweise N-Phenyl-3,5-diethyl-2-propyl-1,2-dihydropyridin (DHP) mit einer Reinheit von mehr als 70 Gew.-% ist.

10. Zusammensetzungen nach Anspruch 9, worin die Butyraldehyd/Anilin-Kondensationsprodukte oder DHP mit einem Lösungsmittel wie Methylenchlorid in Mengen im Bereich von 10 bis 80 Gew.-% verdünnt sind.

11. Zusammensetzungen nach Anspruch 9 oder 10, worin ein lösliches Salz eines Übergangsmetalls, ausgewählt aus Kobalt, Nickel, Kupfer, Mangan, Eisen und Vanadium, in einer Konzentration von nicht mehr als 5 Gew.-%, bezogen auf die Butyraldehyd/Anilin-Kondensationsprodukte oder DHP, zugesetzt ist.

12. Zusammensetzungen nach Anspruch 11, worin das lösliche Salz eines Übergangsmetalls Kupfer(I)- oder -(II)saccharinat oder Eisen(II)- oder -(III)saccharinat ist.

## Revendications

1. Compositions adhésives à plusieurs composants comprenant:
(a) une solution, dans un ou plusieurs monomères vinyliques polymérisables,
(i) d'un polymère chlorosulfoné ou
(ii) d'un élastomère différent du polymère chlorosulfoné en mélange avec un chlorure de sulfonyle;
(b) une oxaziridine de formule générale (I); 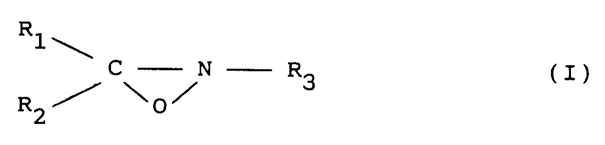 dans laquelle:
R₁, R₂ et R₃, qui peuvent être identiques ou différents, sont indépendamment choisis parmi: l'hydrogène et les radicaux alkyle, isoalkyle, cycloalkyle et aromatique en C₁-C₂₀, ou encore R₁ et R₂ et R₁ ou R₂ et R₃ sont réunis pour former un noyau cycloalkyle ou un noyau hétérocyclique contenant comme hétéroatome l'atome d'azote, ou encore deux radicaux R₃ et deux ou quatre radicaux R₁ et R₂, pris ensemble, forment une polyoxaziridine; et
(c) un agent réducteur organique ou minéral en tant qu'activateur de polymérisation.

2. Compositions selon la revendication 1, dans lesquelles l'oxaziridine de formule (I) est présente en des quantités de 0,1 à 10% en moles par rapport à la quantité globale de doubles liaisons des monomères vinyliques.

3. Compositions selon la revendication 1 ou 2, dans lesquelles l'oxaziridine de formule (I) possède de 1 à 5 noyaux oxaziridine.

4. Compositions selon l'une quelconque des revendications 1 à 3, dans lesquelles les monomères vinyliques polymérisables sont des monomères acryliques, et le polymère chlorosulfoné est le polyéthylène chlorosulfoné, présents en des quantités de 25 à 2000 parties en poids du monomère par 100 parties en poids du polymère.

5. Compositions selon l'une quelconque des revendications 1 à 4, dans lesquelles l'élastomère différent du polymère chlorosulfoné est un élastomère soluble dans lesdits monomères vinyliques polymérisables.

6. Compositions selon l'une quelconque des revendications 1 à 5, dans lesquelles le chlorure de sulfonyle est choisi parmi les chlorures d'alkylsulfonyle contenant de 1 à 12 atomes de carbone, les chlorures d'arylsulfonyle contenant de 6 à 24 atomes de carbone et les chlorures de sulfonyle contenant des hétéroatomes.

7. Compositions selon la revendication 6, dans lesquelles le chlorure de sulfonyle est présent en des quantités de 0,1 à 5% en moles par rapport à la quantité globale de doubles liaisons des monomères vinyliques.

8. Compositions selon l'une quelconque des revendications 1 à 7, dans lesquelles l'agent réducteur est un mélange de produits de condensation aldéhyde/amine.

9. Compositions selon la revendication 8, dans lesquelles le mélange de produits de condensation aldéhyde/amine est constitué de produits de condensation butyraldéhyde/aniline, le composant le plus actif dudit mélange de produits de condensation butyraldéhyde/aniline étant de préférence la N-phényl-3,5-diéthyl-2-propyl-1,2-dihydropyridine (DHP), qui a un degré de pureté supérieur à 70% en poids.

10. Compositions selon la revendication 9, dans lesquelles les produits de condensation butyraldéhyde/aniline ou le DPH sont dilués avec un solvant tel que le chlorure de méthylène en quantité de 10 à 80% en poids.

11. Compositions selon la revendication 9 ou 10, dans lesquelles on ajoute un sel soluble d'un métal de transition choisi parmi le cobalt, le nickel, le cuivre, le manganèse, le fer et le vanadium, à une concentration non supérieure à 5% en poids par rapport aux produits de condensation butyraldéhyde/aniline ou au DHP.

12. Compositions selon la revendication 11, dans lesquelles le sel soluble d'un métal de transition est le saccharinate de cuivre (I) ou (II) ou encore le saccharinate de fer (II) ou (III).
